# EUROPÄISCHE PATENTSCHRIFT

(11) **EP 0 796 771 B1**
(45) Veröffentlichungstag und Bekanntmachung des Hinweises auf die Patenterteilung: **31.10.2001**
(21) Anmeldenummer: 97102186.0
(22) Anmeldetag: 12.02.1997
(51) Int. Cl.: B60R 21/24

(54) **Airbag für Kraftfahrzeuge**
Airbag for motor vehicles
Coussin gonflable pour véhicules automobiles

(30) Priorität: 23.03.1996 DE 19611541
(43) Veröffentlichungstag der Anmeldung: 24.09.1997
(73) Patentinhaber: DaimlerChrysler AG, 70567 Stuttgart (DE)
(72) Erfinder: Rudolf, Harald, 72072 Tübingen (DE); Tschäschke, Ulrich, 71139 Ehningen (DE)

(56) Entgegenhaltungen:
- DE-A- 3 833 888
- DE-A- 4 240 760
- DE-U- 9 211 421
- FR-A- 2 099 107
- FR-A- 2 109 477
- GB-A- 1 362 672
- US-A- 3 727 942

## Beschreibung

Die Erfindung betrifft einen Airbag für Kraftfahrzeuge gemäß dem Oberbegriff des Anspruches 1.

Aus der DE 43 08 387 A1, die im Oberbegriff des Anspruches 1 berücksichtigt ist, ist ein Airbag in einem Kraftfahrzeug bekannt, in dessen Airbaghülle ein Gasströmungsführungsteil in Form eines Innenairbags oder eines breiten Innengurtes vorgesehen ist. Der Innenairbag wird zeitlich vor der Airbaghülle befüllt und soll den eintretenden Gasstrom quer zur Vorderseite der Airbaghülle zuerst zu deren Seitenpartien führen und die Airbaghülle schnell im Durchmesser ausdehnen, wonach erst später eine Ausdehnung in Richtung auf den Insassen erfolgt.

In der DE 92 11 421 U1 ist ein Airbag beschrieben, welcher einen Innenairbag aufweist, der zuerst aufgeblasen wird und länger befüllt bleibt. Damit ist die Airbaghülle als Schutz für den Primäraufprall zuständig, während der Innenairbag den Insassen bei einem Sekundäraufprall auffangen soll.

Aus der EP 0 496 566 A1 ist ein Airbag mit einer Airbaghülle und einem Innenairbag bekannt, der dazu dient, die Airbaghülle vor den einströmenden, heißen Gasen zu schützen.

In der EP 0 593 172 A1 ist ein Airbag mit zwei durch eine als Fangband ausgebildete Kammertrennwand unterteilte Kammern beschrieben, von denen sich beim Crash zunächst eine erste Kammer zum Insassen hin gerichtet ausdehnt, um dessen Oberkörper abzufangen. Hiernach findet durch den weiteren Druckanstieg im Airbag ein Gasdurchtritt durch die in der Kammertrennwand ausgebildeten Ventile in die zweite Kammer statt, die aufgeblasen dann den Kopf und die Schultern des Insassen abfangen kann.

Die GB 1 362 672 A beschreibt eine Sicherheitsvorrichtung für Fahrzeuge zum Schutz von Insassen bei einem Crash, die mindestens einen Hohlraum mit einem relativ geringen Volumen aufweist, in den bei einem Unfall Gas eingeblasen wird. Durch den eintretenden Gasstrom richtet sich der Hohlraum auf und spannt einen Schirm zum Auffangen des Insassen. Der Erfindung liegt die Aufgabe zugrunde, einen Insassen bei einem Crash mit einem gattungsgemäßen Airbag frühzeitig und mit ausreichendem Widerstand vor einem Anprall im Fahrzeuginnenraum abzufangen.

In einem bisher bekannten Airbag mit einteiliger Airbaghülle breitet sich der Gasstrom kegelförmig mit abnehmender Geschwindigkeit aus. Der erfindungsgemäße Innenairbag, mit dem sich in Richtung auf den Insassen konstant verengenden Querschnitt, lenkt dagegen den Gasstrom gebündelt und mit höherer Ausbreitungsgeschwindigkeit auf den Insassen zu. Damit wird der Insasse durch den sich schneller entfaltenden Innenairbag frühzeitig abgefangen und kann frühzeitig an der Fahrzeugverzögerung teilnehmen, wodurch die Belastung von Kopf und Brust beim Crash abgesenkt wird. Auch der Gefahr eines Durchschlagens des Airbags auf die Innenraumverkleidung durch ein frühes Auftreffen, z.B. eines nicht angegurteten Insassen, kann durch die rechtzeitige Bereitstellung des zur Abstützung notwendigen Innendruckes durch den Innenairbag innerhalb der Airbaghülle begegnet werden.

Die schnellere bzw. frühzeitigere Befüllung des Innenairbags wird dadurch begünstigt, daß das Verhältnis seines Eintrittsquerschnittes zu seinem Füllvolumen im Vergleich größer als das entsprechende Verhältnis des Eintrittsquerschnittes zum Füllvolumen für die Airbaghülle ist. Eine weitere Möglichkeit, die Befüllung zu beschleunigen, wird durch einen gegenüber der Airbaghülle größeren Eintrittsquerschnitt des Innenairbags erreicht.

Der Innenairbag kann sich von der Gasaustrittsöffnung an der Gasquelle bis zur gegenüberliegenden, stoßnahen Anprallfläche an der Airbaghülle erstrecken und an dieser festgenäht sein, wodurch die Airbaghülle in der Richtung auf den Insassen zu durch die Befüllung des Innenairbags bereits ihre gewollte maximale Ausdehnung erhalten würde. Durch die Vernähung wird das Volumen des Innenairbags für eine schnelle Befüllung abgeschlossen. Der Innenairbag kann dabei zudem die Funktion eines Fangbandes übernehmen, welches die Airbaghülle in einer gewünschten Form hält. Eine rundverlaufende Nähnaht hält den Innenairbag ohne große Spannungsspitzen in einzelnen Nähabschnitten bei der Belastung mit der Airbaghülle verbunden.

Der Innenairbag kann seine Funktion für eine in der Richtung gezielte und schnelle Gasbefüllung auch dann erfüllen, wenn er nicht bis an die Anprallfläche der Airbaghülle reicht, sondern früher endet, also z.B. eine kegelstumpf- oder pyramidenstumpfförmige Kontur aufweist. Der notwendige Innendruck im Innenairbag kann dabei auch mit einer Öffnung am anprallflächennahen Ende erzeugt und aufrechterhalten werden. Andererseits kann es für die schnelle Befüllung auch günstig sein, den Innenairbag mit einem flachen, in etwa senkrecht zur Erstreckung des Innenairbags an diesem befestigten Deckel zu verschließen. Auf den Anwendungsfall bezogen ist also eine Festlegung des Innenairbags nahe der Gasquelle oder nahe der stoßnahen Anprallfläche der Airbaghülle mit einer gegenüber der Längsausdehnung der Airbaghülle verkürzten Längserstreckung möglich, wie auch ein Innenairbag, der sich über die gesamte Längsausdehnung der Airbaghülle erstreckt.

Der Innenairbag ist mit einer konischen Gestalt einfach zu fertigen, wobei er mit seinem Eintrittsquerschnitt für den Gaseintritt dennoch rechteckförmig an dem meist rechteckförmigen Aufnahmebehälter festgelegt werden kann. Eine koaxiale Anordnung des Innenairbags in der Airbaghülle führt zudem zu einer gleichförmigen Befüllung des Innenairbags wie auch der Airbaghülle.

Zur Unterstützung der Befüllung der Airbaghülle zusätzlich zum Gaseintritt an deren Eintrittsquerschnitt kann der Innenairbag gasdurchlässig ausgeführt sein, indem das verwendete Material ab einem bestimmten Innendruck gasdurchlässig ist, oder der Innenairbag mit speziellen Gasaustrittsöffnungen oder Reißnähten versehen ist, durch die nach einer vorbestimmten Zeit Gas aus dem Innenairbag in die Airbaghülle einströmen kann.

Dabei ist es zusätzlich möglich, das in die Airbaghülle aus dem Innenairbag eintretende Gas zu filtern, und dadurch die für den Insassen unangenehmen Abbrandrückstände eines Gasgenerators zurückzuhalten.

Ein erfindungsgemäßer Airbag ist insbesondere bei der Verwendung als Beifahrerairbag von Vorteil, da hier der Innenairbag eine frühzeitige Abstützung gewährleistet, wenn das hier notwendige, große Volumen der Airbaghülle noch nicht vollständig befüllt sein kann.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in einer schrägen Ansicht eine Airbaghülle mit einem Innenairbag, aus einem Airbaggehäuse ausgetreten und in Richtung auf einen Insassen gerichtet, und
- Fig. 2: ein zweites Ausführungsbeispiel einer Airbaghülle mit einem kürzeren Innenairbag.

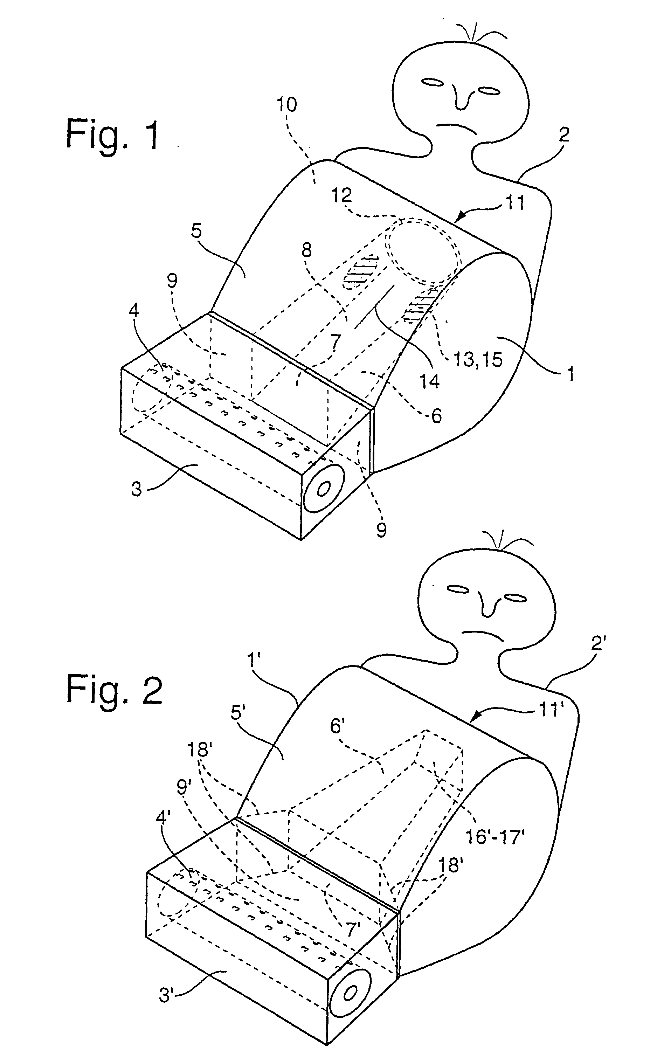

Die Figuren 1 und 2 zeigen in einem Schrägbild von der Rückseite einen Airbag 1, 1', welcher sich bei einem Crash in Richtung auf einen Insassen 2, 2' entfaltet hat und aufgeblasen vor diesem liegt, um ihn vor einem harten Anprall zu schützen. Der Airbag 1, 1' liegt im hier nicht näher dargestellten Ruhezustand eingefaltet in einem Aufnahmebehälter 3, 3', an dem er auch mit seinem Öffnungsrand festgelegt ist, wobei der Aufnahmebehälter 3, 3' z.B. in einem Lenkrad, einer Instrumententafel oder einer Fahrzeugseitenwand vertieft liegen kann. Im Aufnahmebehälter 3, 3' ist zudem eine Gasquelle 4, 4', die hier als Gasgenerator ausgebildet ist, untergebracht, die bei einem Crash den Gasstrom liefert, der zur Entfaltung und Befüllung des Airbags 1, 1' führt.

Der erfindungsgemäße Airbag 1, 1' weist innerhalb einer äußeren Airbaghülle 5, 5' einen Innenairbag 6, 6' auf. Dieser Innenairbag 6, 6' wird durch seinen, sich in Richtung auf den Insassen 2, 2' konstant verengenden Querschnitt bei einem Crash durch den Gasstrom aus der Gasquelle 4, 4' schnell und gezielt in Richtung auf den Insassen 2, 2' aufgeblasen. Damit wird der Insasse 2, 2', durch den sich schneller als die Airbaghülle 5, 5' befüllenden Innenairbag 6, 6', frühzeitig abgefangen und kann frühzeitig an der Fahrzeugverzögerung teilnehmen, wodurch die Belastung von Kopf und Brust beim Crash abgesenkt wird. Auch der Gefahr eines Durchschlagens des Airbags 1, 1' auf eine Innenraumverkleidung durch ein frühes Auftreffen, z.B. eines nicht angegurteten Insassen 2, 2', kann durch die rechtzeitige Bereitstellung des zur Abstützung notwendigen Innendruckes durch den Innenairbag 6, 6' innerhalb der Airbaghülle 5, 5' begegnet werden. Der Innenairbag 6, 6' sorgt für einen direkten und gebündelten Volumenstrom des Gases in Richtung auf den Insassen 2, 2' und ist durch sein begrenztes Volumen schnell zu befüllen und zu entfalten. Gegenüber dem sich in der kugelförmigen Airbaghülle 5, 5' mit abnehmender Geschwindigkeit expandierenden Gasstrom ist die Ausbreitungsgeschwindigkeit in diesem Innenairbag 6, 6' erhöht, und damit die Befüllung schneller abgeschlossen, so daß eine Rückhaltung des Insassen 2, 2' durch den befüllten Innenairbag 6, 6' zu einem besonders frühen Zeitpunkt möglich ist.

Dieser Airbag 1, 1' ist insbesondere bei der Verwendung als Beifahrerairbag von Vorteil, da hier der Innenairbag 6, 6' eine frühzeitige Abstützung gewährleistet, wenn das hier notwendige, große Volumen der Airbaghülle 5, 5' noch nicht vollständig befüllt sein kann. Eine schnelle Befüllung des ganzen Airbags 1, 1', mit der daraus resultierenden, großen Kraftentwicklung gegen den Insassen 2, 2', kann hierdurch vermieden werden.

In Fig. 1 erstreckt sich der Innenairbag 2 vom Eintrittsquerschnitt 9 der Airbaghülle 5 nahe der Gasquelle 4 bis zu einer gegenüberliegenden, stoßnahen Anprallfläche 11 der Airbaghülle 5, wo der Innenairbag 2 mit der Airbaghülle 5 in einer rundverlaufenden Nähnaht 12 vernäht ist. Durch die Vernähung wird das Volumen des Innenairbags 6 für eine schnelle Befüllung abgeschlossen. Hier erhält die Airbaghülle 5 in der Richtung auf den Insassen 2 zu durch die Befüllung des Innenairbags 6 bereits ihre gewollte maximale Ausdehnung. Der Innenairbag 6 kann dabei mit seiner Längserstreckung ein übliches Fangband ersetzen, welches die Airbaghülle 5 in einer gewünschten Form hält. Die rundverlaufende Nähnaht 12 hält den Innenairbag 6 ohne große Spannungsspitzen in einzelnen Nähabschnitten bei der Belastung mit der Airbaghülle 5 verbunden.

Der Innenairbag 6, wie auch die Airbaghülle 5, werden hier durch die Gasquelle 4 mit einem Gasstrom beliefert. Die Airbaghülle 5 kann aber auch ausschließlich oder zusätzlich mit Gas aus dem Innenairbag 6 befüllt werden. Der Innenairbag 6 kann für diesen Fall ein Material aufweisen, welches ab einem bestimmten Innendruck gasdurchlässig ist. Weiterhin ist der Innenairbag 6 auch mit speziellen Gasdurchtrittsöffnungen 13 oder hier nur angedeuteten Reißnähten 14 auszubilden, durch die nach einer vorbestimmten Zeit bzw. einem erreichten Innendruck Gas aus dem Innenairbag 6 in die Airbaghülle 5 einströmen kann.

Dabei ist es zusätzlich möglich, das in die Airbaghülle 5 aus dem Innenairbag 6 eintretende Gas zu filtern, indem das Gas durch ein Filtergewebe 15 strömt, und dadurch die für den Insassen 2 unangenehmen Abbrandrückstände des Gasgenerators zurückgehalten werden.

Zur schnelleren bzw. frühzeitigeren Befüllung des Innenairbags 6 trägt ebenso bei, daß das Verhältnis seines Eintrittsquerschnittes 7 für den Gasstrom aus der Gasquelle 4 zu seinem Füllvolumen 8 im Vergleich größer ist als das entsprechende Verhältnis des Eintrittsquerschnittes 9 zum Füllvolumen 10 für die Airbaghülle 5. Eine weitere Möglichkeit, die Befüllung zu beschleunigen, ist durch einen gegenüber dem Eintrittsquerschnitt 9 der Airbaghülle 5 größeren Eintrittsquerschnitt 7 des Innenairbags 6 gegeben. Der Innenairbag 6 ist mit einer konischen Gestalt einfach zu fertigen, wobei er mit seinem Eintrittsquerschnitt 7 für den Gaseintritt dennoch rechteckförmig an dem meist rechteckförmigen Aufnahmebehälter 3 festgelegt werden kann. Eine in Längsrichtung auf den Insassen 2 zu koaxiale Anordnung des Innenairbags 6 in der Airbaghülle 5 führt zudem zu einer gleichförmigen Befüllung des Innenairbags 6 wie auch der Airbaghülle 5.

Wie in der Fig. 2 dargestellt, kann der Innenairbag 6' seine Funktion für eine in der Richtung gezielte und schnelle Gasbefüllung auch dann erfüllen, wenn er nicht bis an die Anprallfläche 11' der Airbaghülle 5' reicht, sondern früher endet, oder auch mit seinem Eintrittsquerschnitt 7' mit Abstand vom Eintrittsquerschnitt 9' der Airbaghülle 5' innerhalb dieser liegt. Der Innenairbag 6' kann also auch z.B. eine kegelstumpf- oder pyramidenstumpfförmige Kontur aufweisen. Der notwendige Innendruck im Innenairbag 6' kann dabei trotz einer Öffnung 16' im Innenairbag 6' am anprallflächennahen Ende erzeugt und aufrechterhalten werden. Andererseits kann es hier für die schnelle Befüllung auch günstig sein, den Innenairbag 6' mit einem flachen, in etwa senkrecht zur Erstreckung des Innenairbags 6' an diesem befestigten Deckel 17' aus demselben Material zu verschließen. Auf den Anwendungsfall bezogen ist also eine Festlegung des Innenairbags 6' nahe der Gasquelle 4' oder nahe der stoßnahen Anprallfläche 11' der Airbaghülle 5' mit einer gegenüber der Längsausdehnung der Airbaghülle 5' verkürzten Längserstreckung möglich. Bei einer derartigen Ausbildung des Innenairbags 6' können diesen fixierende Fangbänder 18' vorteilhaft sein. Weitere Ausbildungsmöglichkeiten entsprechen den zu Fig. 1 beschriebenen Ausbildungsmöglichkeiten.

## Patentansprüche

1. Airbag für Kraftfahrzeuge, mit einer Airbaghülle und einem Innenairbag, der durch sein geringeres Volumen zeitlich vor der Airbaghülle aufgeblasen ist, und der durch seine Gestalt den Gasstrom gezielt in eine Richtung lenkt,
**dadurch gekennzeichnet,**
**daß** der Innenairbag (6, 6') mit einer langgestreckten Form auf den Insassen (2, 2') zu gerichtet ist und einen sich in Richtung auf den Insassen (2, 2') konstant verengenden Querschnitt aufweist.

2. Airbag nach Anspruch 1,
**dadurch gekennzeichnet,**
**daß** der dem Innenairbag (6) zugeordnete Eintrittsquerschnitt (7) für den Gasstrom bezogen auf das Füllvolumen (8) des Innenairbags (6) größer ist, als das entsprechende Verhältnis (9, 10) für die Airbaghülle (5).

3. Airbag nach Anspruch 1,
**dadurch gekennzeichnet,**
**daß** der Eintrittsquerschnitt (9) für den Gasstrom in die Airbaghülle (5) geringer als der Eintrittsquerschnitt (7) in den Innenairbag (6) ist.

4. Airbag nach Anspruch 1,
**dadurch gekennzeichnet,**
**daß** sich der Innenairbag (6) vom Eintrittsquerschnitt (9) der Airbaghülle (5) nahe der Gasquelle (4) bis zur gegenüberliegenden, stoßnahen Anprallfläche (11) der Airbaghülle (5) erstreckt.

5. Airbag nach Anspruch 4,
**dadurch gekennzeichnet,**
**daß** der Innenairbag (6) mit der stoßnahen Anprallfläche (11) der Airbaghülle (5) vernäht ist.

6. Airbag nach Anspruch 5,
**dadurch gekennzeichnet,**
**daß** die Vernähung des Innenairbags (6) mit der Airbaghülle (5) über eine rundverlaufende Nähnaht (12) erfolgt.

7. Airbag nach Anspruch 5,
**dadurch gekennzeichnet,**
**daß** der Innenairbag (6) als Fangband für die Airbaghülle (5) vorgesehen ist.

8. Airbag nach Anspruch 1,
**dadurch gekennzeichnet,**
**daß** der Innenairbag (6') mit einem flachen, in etwa senkrecht zur Längsachse des Innenairbags (6') ausgerichteten und an diesem befestigten Deckel (17') verschlossen ist.

9. Airbag nach Anspruch 1,
**dadurch gekennzeichnet,**
**daß** der Innenairbag (6') als Kegelstumpf ausgebildet ist.

10. Airbag nach Anspruch 1,
**dadurch gekennzeichnet,**
**daß** der Innenairbag (6') als Pyramidenstumpf ausgebildet ist.

11. Airbag nach Anspruch 1,
**dadurch gekennzeichnet,**
**daß** der Innenairbag (6, 6') an seinem Eintrittsquerschnitt (7, 7') eine rechteckige Form aufweist.

12. Airbag nach Anspruch 1,
**dadurch gekennzeichnet,**
**daß** der Innenairbag (6, 6') koaxial in Längsrichtung der Airbaghülle (5, 5') angeordnet ist.

13. Airbag nach Anspruch 1,
**dadurch gekennzeichnet,**
**daß** am Innenairbag (6) Gasdurchtrittsöffnungen (13) für den Gasdurchlaß in die Airbaghülle (5) vorgesehen sind.

14. Airbag nach Anspruch 1,
**dadurch gekennzeichnet,**
**daß** der Innenairbag (6) mindestens eine Reißnaht (14) aufweist, die durch den Innendruck aufreißt und Gas in die Airbaghülle (5) einströmen läßt.

15. Airbag nach Anspruch 1,
**dadurch gekennzeichnet,**
**daß** das Material des Innenairbags (6) ab einem vorbestimmbaren Innendruck gasdurchlässig ausgebildet ist.

16. Airbag nach Anspruch 1,
**dadurch gekennzeichnet,**
**daß** der Innenairbag (6) gasdurchlässiges Filtergewebe (15) aufweist.

17. Airbag nach Anspruch 1,
**dadurch gekennzeichnet,**
**daß** der Airbag (1, 1') als Beifahrerairbag vorgesehen ist.

## Claims

1. An airbag for a motor vehicle with an airbag jacket and an inner airbag which due to its smaller volume is inflated before the airbag jacket and which due to its shape guides the gas flow specifically in one direction,
**characterised in that**
the inner airbag (6, 6') is directed towards the occupant (2, 2') with an elongated form and has a cross section which narrows constantly in the direction of the occupant (2, 2').

2. An airbag in accordance with claim 1,
**characterised in that**
the ratio between the intake cross section (7) for the gas flow and the filling volume (8) of the inner airbag (6) is greater than the corresponding ratio (9, 10) for the airbag jacket (5).

3. An airbag in accordance with claim 1,
**characterised in that**
the intake cross section (9) for the flow of gas into the airbag jacket (5) is smaller than the intake cross section (7) into the inner airbag (6).

4. An airbag in accordance with claim 4,
**characterised in that**
the inner airbag (6) extends from the intake cross section (9) of the airbag jacket (5) near the gas source (4) to the opposite impact surface (11) of the airbag jacket (5) close to the impact.

5. An airbag in accordance with claim 4,
**characterised in that**
the impact surface (11) of the inner airbag (6) close to the impact is sewn to the airbag jacket (5).

6. An airbag in accordance with claim 5,
**characterised in that**
the inner airbag (6) is sewn to the airbag jacket (5) by means of a circumferential sewn seam (12).

7. An airbag in accordance with claim 1,
**characterised in that**
the inner airbag (6) is provided as a rebound strap for the airbag jacket (5).

8. An airbag in accordance with claim 1,
**characterised in that**
the inner airbag (6') is closed with a flat lid (17') oriented approximately vertically in relation to the longitudinal axis of the inner airbag (6') and attached to it.

9. An airbag in accordance with claim 1,
**characterised in that**
the inner airbag (6') is designed as a truncated cone.

10. An airbag in accordance with claim 1,
**characterised in that**
the inner airbag (6') is designed as a truncated pyramid

11. An airbag in accordance with claim 1,
**characterised in that**
the intake cross section (7, 7') of the inner airbag (6, 6') is rectangular in form.

12. An airbag in accordance with claim 1,
**characterised in that**
the inner airbag (6, 6') is positioned coaxially lengthways to the airbag jacket (5, 5').

13. An airbag in accordance with claim 1,
**characterised in that**
gas intake openings (14) are provided in the inner airbag (6) to allow gas into the airbag jacket (5).

14. An airbag in accordance with claim 1,
**characterised in that**
the material of the inner airbag (6) has at least one tear seam (14) which tears open due to the internal pressure and allows gas to flow into the airbag jacket (5).

15. An airbag in accordance with claim 1,
**characterised in that**
the material of the inner airbag (6) is designed to be gas permeable with effect from a pre-determinable internal pressure.

16. An airbag in accordance with claim 1,
**characterised in that**
the inner airbag (6) has a gas permeable fabric filter (15).

17. An airbag in accordance with claim 1,
**characterised in that**
the airbag (1, 1') is provided as a passenger airbag.

## Revendications

1. Sac gonflable pour véhicules automobile comportant une enveloppe de sac gonflable et un sac gonflable intérieur, qui, du fait de son faible volume, est gonflé temporellement avant l'enveloppe de sac gonflable et qui, du fait de sa forme, dirige le flux de gaz à dessein selon une direction
**caractérisé en ce que**
le sac gonflable intérieur (6, 6'), ayant une forme allongée, est orienté vers les passagers (2, 2') et présente une section transversale rétrécissant de façon constante, en allant en direction des passagers (2, 2').

2. Sac gonflable selon la revendication 1, **caractérisé en ce que** le rapport entre la section transversale d'entrée (7), associée au sacgonflable intérieur (6), offerte à l'écoulement de gaz, par rapport au volume de remplissage (8) du sac gonflable intérieur (6), est supérieur au rapport correspondant, entre la section transversale d'entrée et le volume de remplissage (9, 10), de l'enveloppe de sac gonflable (5).

3. Sac gonflable selon la revendication 1,
**caractérisé en ce que** la section transversale d'entrée (9) du flux de gaz dans l'enveloppe de sac gonflable (5) est inférieure à la section transversale d'entrée (7) dans le sac gonflable intérieur (6).

4. Sac gonflable selon la revendication 1,
**caractérisé en ce que** le sac gonflable intérieur (6) s'étend de la section transversale d'entrée (9), de l'enveloppe de sac gonflable (5) à proximité de la source de gaz (4) jusqu'à la surface d'impact (11) proche du choc, opposée, de l'enveloppe de sac gonflable (5).

5. Sac gonflable selon la revendication 4, **caractérisé en ce que** le sac gonflable intérieur (6) est cousu à la surface d'impact (11) proche de l'impact de l'enveloppe de sac gonflable (5).

6. Sac gonflable selon la revendication 5, **caractérisé en ce que** la couture du sac gonflable intérieur (6) à l'enveloppe de sac gonflable (5) s'effectue par un cordon de couture (12) d'allure ronde.

7. Sac gonflable selon la revendication 5, **caractérisé en ce que**
le sac gonflable intérieur (6) est prévu sous la forme de bande de contention pour l'enveloppe de sac gonflable (5).

8. Sac gonflable selon la revendication 1, **caractérisé en ce que** le sac gonflable intérieur (6') est fermé par un couvercle (17') plat, orienté à peu près perpendiculairement à l'axe longitudinal du sac gonflable intérieur (6) et fixé sur celui-ci.

9. Sac gonflable selon la revendication 1, **caractérisé en ce que** le sac gonflable intérieur (6') est réalisé sous la forme de tronc de cône.

10. Sac gonflable selon la revendication 1, **caractérisé en ce que** le sac gonflable intérieur (6') est réalisé sous la forme de tronc de pyramide.

11. Sac gonflable selon la revendication 1, **caractérisé en ce que** le sac gonflable intérieur (6, 6') présente à sa section transversale d'entrée (7, 7') une forme rectangulaire.

12. Sac gonflable selon la revendication 1, **caractérisé en ce que** le sac gonflable intérieur (6, 6') est disposé coaxialement dans la direction longitudinale de l'enveloppe de sac gonflable (5, 5').

13. Sac gonflable selon la revendication 1, **caractérisé en ce que** sur le sac gonflable intérieur (6) sont prévues des ouvertures de passage de gaz (13) pour le passage des gaz dans l'enveloppe de sac gonflable (5).

14. Sac gonflable selon la revendication 1, **caractérisé en ce que** le sac gonflable intérieur (6) présente au moins un cordon de déchirement (14), qui s'ouvre par déchirement sous l'effet de la pression intérieure et laisse s'écouler du gaz dans l'enveloppe de sac gonflable (5).

15. Sac gonflable selon la revendication 1, **caractérisé en ce que** le matériau du sac gonflable intérieur (6) est perméable au gaz à partir d'une pression intérieure susceptible d'être prédéterminée.

16. Sac gonflable selon la revendication 1, **caractérisé en ce que** le sac gonflable intérieur (6) présente un textile filtrant (15) perméable au gaz.

17. Sac gonflable selon la revendication 1, **caractérisé en ce que** le sac gonflable intérieur (1, 1') est prévu en tant qu'sac gonflable passager.
